# EUROPÄISCHE PATENTSCHRIFT

(11) **EP 2 167 583 B1**
(45) Veröffentlichungstag und Bekanntmachung des Hinweises auf die Patenterteilung: **29.02.2012**
(21) Anmeldenummer: 08785973.2
(22) Anmeldetag: 08.07.2008
(51) Int. Cl.: C08L 53/02, C08K 3/04, C08K 5/49, C08K 3/32, C08L 27/12, C08K 13/02, C09K 21/14

(54) **FLAMMGESCHÜTZTES, ELASTISCHES BLOCKCOPOLYMERISAT**
FLAME-RETARDANT ELASTIC BLOCK COPOLYMER
COPOLYMÈRE À BLOCS ÉLASTIQUE IGNIFUGÉ

(30) Priorität: 10.07.2007 EP 07112183; 18.09.2007 EP 07116636; 28.09.2007 EP 07117513
(43) Veröffentlichungstag der Anmeldung: 31.03.2010
(73) Patentinhaber: BASF SE, 67056 Ludwigshafen (DE)
(72) Erfinder: KNOLL, Konrad, 68199 Mannheim (DE); STAAL, Maarten, 68167 Mannheim (DE); CHAROENSIRISOMBOON, Piyada, 68165 Mannheim (DE); WARZELHAN, Volker, 67273 Weisenheim (DE)
(74) Vertreter: Jacobi, Markus Alexander
(86) Internationale Anmeldenummer: PCT/EP2008/058857
(87) Internationale Veröffentlichungsnummer: WO 2009/007370

(56) Entgegenhaltungen:
- EP-A- 0 730 000
- DATABASE CA [Online] CHEMICAL ABSTRACTS SERVICE, COLUMBUS, OHIO, US; 18. Oktober 2004 (2004-10-18), JYUNG, JONG HOON ET AL: "Styrene resin compositions with nonhalogen flame retardant" XP002497056 gefunden im STN Database accession no. 2004:854185 in der Anmeldung erwähnt & KR 203 633 B1 (CHEIL INDUSTRIES INC., S. KOREA) 15. Juni 1999 (1999-06-15)

## Beschreibung

Die Erfindung betrifft ein flammgeschütztes elastisches Blockpolymerisat enthaltend polymerisierte Einheiten wenigstens eines vinylaromatischen Monomeren und wenigstens eines Dienmonomeren mit wenigstens einem Flammschutzmittel B), ein Verfahren zur Herstellung sowie die Verwendung zur Herstellung von Formkörpern.

Mit expandierbarem Graphit, der auch als Blähgraphit bezeichnet wird, als Flammschutzmittel ausgerüstete thermoplastische Polymermassen sind bekannt. Beispielsweise wird gemäß WO 03/046071 A1 expandierbarer Graphit in Polystyrol (PS) oder schlagzäh modifiziertem Polystyrol (HIPS) eingesetzt. Darüber hinaus wird laut dieser Schrift als weitere Flammschutzmittelkomponente eine halogenhaltige Verbindung in Mengen von 2 bis 11%, gerechnet als Halogen, benötigt. Es ist jedoch wünschenswert, den Einsatz halogenhaltiger Flammschutzmittel möglichst weitgehend zu vermeiden.

Halogenfrei flammgeschützte Thermoplaste, die expandierbaren Graphit und eine Phosphorverbindung als Flammschutzkomponenten enthalten, werden in WO 00/034367 und WO 00/34342 offenbart. Formmassen auf Basis solcherart flammgeschützter Styrolpolymerisate sind bzgl. ihres Abtropfverhaltens im Brandfall aber verbesserungswürdig.

Die KR1996-0001006 (KR 100203633B) offenbart flammgeschütztes Polystyrol, wobei die Flammschutzmittelkomponenten expandierbaren Graphit, eine Phosphorverbindung und Teflon umfassen. Die mittlere Teilchengröße des expandierbaren Graphits beträgt 5 µm. Das als Antitropfmittel zugesetzte Teflon wird in Mengen von 1 bis 5 Gewichtsprozent eingesetzt.

Ebenfalls mit Blähgraphit, einer Phosphorverbindung und einem fluorierten Polymer flammgeschützte elastische Blockcopolymerisate werden offenbart in EP2178970 und WO2009/037236, wobei es sich bei den Polymerkomponenten der erstgenannten Schrift um Acrylnitril-Butadien-StyrolCopolymere (ABS) und Acrylat-Styrol-Acrylnitril-Copolymere (ASA) handelt, bei denen der zweitgenannten Schrift um PS und HIPS.

Oftmals ist es schwierig, bei thermoplastischen Formmassen, die mit expandierbarem Graphit flammhemmend ausgerüstet sind, einerseits eine ausreichende Flammhemmung zu erreichen, andererseits aber dennoch ausreichend gute mechanische Eigenschaften beizubehalten.

Bei zahlreichen Anwendungen im elektrischen und elektronischen Bereich (Computer und Bürogeräte, etc.) wie Isolierungen, im Automobil-Innenbereich und im Bausektor werden flammwidrige Materialien vorgeschrieben. Aus Korrosions- und gesundheitlichen Gründen sind halogenfreie Lösungen für Flammschutz erwünscht. Um überhaupt ausreichenden halogenfreien Flammschutz zu erzielen, müssen Kombinationen von Additiven wie Blähgraphit (intumeszierend), Teflondispersionen (gegen Abtropfen), Phosphatsalze von Melamin, roter Phosphor (Radikalfänger in der Flamme), Metallhydroxide (Wasserlieferant), etc. verwendet werden. Der Nachteil solcher in erheblichen Gewichtsanteilen eingesetzten Zusätze ist ein gewöhnlich massiver Einbruch der Zähigkeit.

Der Erfindung lag die Aufgabe zugrunde, für Elastomere, speziell für thermoplastische Elastomere, mit einer vorzugsweise aus Styrol und Butadien bestehenden Weichphase ein Flammschutz-System zur Verfügung zu stellen, das selbstverlöschend ist, ohne die elastomeren, mechanischen Eigenschaften zu beeinträchtigen.

Gegenstand der Erfindung ist ein flammgeschütztes elastisches Blockpolymerisat enthaltend polymerisierte Einheiten wenigstens eines vinylaromatischen Monomeren und wenigstens eines Dienmonomeren mit wenigstens einem Flammschutzmittel B, dadurch gekennzeichnet, dass das Flammschutzmittel B)
B1) einen expandierbaren Graphit
B2) eine Phosphor enthaltende Flammschutz-Verbindung und
B3) ein fluorhaltiges Polymer enthält.

In einer bevorzugten Ausführungsform können die erfindungsgemäßen Blockcopolymerisate weitere Polymere, insbesondere Thermoplaste enthalten, insbesondere die in der DE 44 46 896 A1 und der korrespondierenden EP 08 00 554 (WO 96/20248), dort unter der Bezeichnung "Komponente P2" angegebenen Polymerisate, vorzugsweise teilkristalline Polyamide, teilaromatische Copolyamide, Polyolefine, lonomere, Polyester, Polyetherketone, Polyoxyalkylene, Polyarylensulfide und weiterhin Polyurethane, nicht kristalline Copolymorisate wie Acrylnitril-Butadien-Styrol-Polymerisate (ABS), Acrylnitril-Styrol-Acrylester-Polymerisate (ASA), Polycarbonate und Polycarbonat-Polysiloxan-Blockcopolymere. Besonders geeignete Verbindungen werden in der WO 96/20248 von Seite 11, Zeile 1 bis Seite 24, Zeile 44 und in der DE 44 46 896 A1 von Seite 2, Zeile 53 bis Seite 8, Zeile 10, aufgeführt.

Die in dieser Ausführungsform zusätzlich vorhandenen Polymere sind vorzugsweise zu weniger als 50 Gew.-%, bezogen auf die Summe aus dem erfindungsgemäßen Blockcopolymerisat, den zusätzlichen Polymeren und gegebenenfalls weiteren Einsatzstoffen eingesetzt, in einer weiteren bevorzugten Ausführungsform beträgt die Menge 5 bis 40 Gew.-%.

Das erfindungsgemäße elastische Blockcopolymerisat enthält vorzugsweise mindestens einen einpolymerisierte Einheiten eines vinylaromatischen Monomeren aufweisenden, eine Hartphase bildenden Block A und/oder einen Dienmonomere aufweisenden, eine erste, gummielastische (Weich-)Phase bildenden Block B und mindestens einen einpolymerisierte Einheiten eines vinylaromatischen Monomeren sowie eines Diens aufweisenden elastomeren, eine Weichphase bildenden Block B/A, wobei die Glastemperatur T_{g} des Blocks A über 25 °C und die der Blöcke B bzw. B/A unter 25°C liegt und das Phasenvolumen-Verhältnis von Block A zu Block B/A so gewählt ist, dass der Anteil der Hartphase am gesamten Blockcopolymerisat 1-40 Volumen-% und der Gewichtsanteil des Diens weniger als 50 Gew.-% beträgt.

Man erhält ein solches gummielastisches Blockcopolymerisat dadurch, dass im Rahmen der vorstehenden Parameter die Weichphase aus einem statistischen Copolymerisat eines Vinylaromaten mit einem Dien gebildet wird; statistische Copolymerisate von Vinylatomaten und Dienen erhält man durch Polymerisation in Gegenwart eines polaren Cosolvens.

Ein erfindungsgemäßes Blockcopolymerisat kann z. B. durch eine der allgemeinen Formeln 1 bis 11 dargestellt werden:
(1) (A-B/A)ₙ; (2) (A-B/A)ₙ-A; (3) B/A-(A-B/A)ₙ; (4) X-[(A-B/A)ₙ]ₘ₊ₗ; (5) X-[(B/A-A)ₙ]ₘ₊ₗ; (6) X-[(A-B/A)ₙ-A]ₘ₊ₗ; (7) X-[(B/A-A)n-B/A]ₘ₊ₗ; (8) Y-[(A-B/A)ₙ]ₘ₊ₗ; (9) Y-[(B/A-A)ₙ]ₘ₊ₗ; (10) Y-[(A-B/A)ₙ₋ₐ]ₘ₊ₗ; (11) Y-[(B/A-A)ₙ-B/A]ₘ₊ₗ; wobei

A für den vinylaromatischen Block und

B/A für die Weichphase, also den statistisch aus Dien- und vinylaromatischen Einheiten aufgebauten Block steht,
X den Rest eines n-funktionellen Initiators,
Y den Rest eines m-funktionellen Kopplungsmittels und
m und n natürliche Zahler von 1 bis 10 bedeuten.

Bevorzugt ist ein Blockcopolymerisat einer der allgemeinen Formeln A-B/A-A, X-[-B/A-A]₂ und Y-[-B/A-A]₂ (Bedeutung der Abkürzungen wie vorstehend) und besonders bevorzugt ein Blockcopolymerisat, dessen Weichphase unterteilt ist in Blöcke (12) (B/A)1-(B/A)₂; (13)(B/A)₁-(B/A)₂-(B/A)₁; (14)(B/A)₁-(B/A)₂-(B/A)₃; deren Vinylaromat/Dien-Verhältnis in den einzelnen Blöcken B/A unterschiedlich ist oder sich innerhalb eines Blocks in den Grenzen(B/A)₁→(B/A)₂ kontinuierlich ändert, wobei die Glasübergangstemperatur T_{g} jedes Teilblocks unter 25°C liegt, bevorzugt unter 0°C, insbesondere unter -20°C.

Ein Blockcopolymerisat, das mehrere Blöcke B/A und/oder A mit unterschiedlicher Molmasse je Molekül aufweist, ist ebenfalls bevorzugt.

Ebenso kann an die Stelle eines ausschließlich aus vinylaromatischen Einheiten aufgebauten Blocks A ein Block B treten, da es insgesamt lediglich darauf ankommt, dass ein gummielastisches Blockcopolymerisat gebildet wird. Solche Copolymerisate können z. B. die Struktur (15) bis (18) haben (15) B-(B/A); (16) (B/A)-B-(B/A); (17) (B/A)₁-B-(B/A)₂; (18)B-(B/A)₁-(B/A)₂.

Bevorzugt als vinylaromatische Verbindung im Sinne der Erfindung ist Styrol und ferner a-Methylstyrol und Vinyltoluol sowie Mischungen dieser Verbindungen. Bevorzugte Diene sind Butadien und Isopren, ferner Piperylen, I-Phenylbutadien sowie Mischungen dieser Verbindungen.

Eine besonders bevorzugte Monomerkombination ist Butadien und Styrol. Alle nachstehenden Gewichts- und Volumenangaben beziehen sich auf diese Kombination; bei Verwendung der technischen Äquivalente von Styrol und Butadien muss man ggf. die Angaben entsprechend umrechnen.

Der B/A-Block wird aus etwa 75 - 30 Gew.-% Styrol und 25 - 70 Gew.-% Butadien aufgebaut. Besonders bevorzugt hat ein Weichblock einen Butadienanteil zwischen 35 und 70 % und einen Styrolanteil zwischen 65 und 30 %.

Der Gewichtsanteil des Diens im gesamten Blockcopolymerisat liegt im Falle der Monomerkombination Styrol/Butadien bei 15 - 65 Gew.-%, derjenige der vinylaromatischen Komponente entsprechend bei 85 - 35 Gew.-%. Besonders bevorzugt sind Butadien-Styrol-Blockcopolymerisate mit einer Monomerzusammensetzung aus 25 - 60 Gew.% Dien und 75 - 40 Gew.% an vinylaromatischer Verbindung.

Vorzugsweise werden die Blockcopolymerisate durch anionische Polymerisation in einem unpolaren Lösungsmittel unter Zusatz eines polaren Cosolvens oder Alkali- oder Erdalkalimetallsalzes hergestellt. Als Lösungsmittel werden bevorzugt aliphatische Kohlenwasserstoffe wie Cyclohexan oder Methylcyclohexan verwendet.

Die anionische Polymerisation wird vorzugsweise mittels metallorganischer Verbindungen initiiert. Bevorzugt sind Verbindungen der Alkalimetalle, besonders des Lithiums. Beispiele für Initiatoren sind Methyllithium, Ethyllithium, Propyllithium, n-Butyliithium, sek. Butyllithium und tert. Butyllithium. Die metallorganische Verbindung wird als Lösung in einem chemisch indifferenten (inerten) Kohlenwasserstoff zugesetzt. Die Dosierung richtet sich nach dem angestrebten Molekulargewicht des Polymeren, liegt aber in der Regel im Bereich von 0.002 bis 5 Mol %, wenn man sie auf die Monomeren bezieht.

Zur Angleichung der Copolymerisationsparameter für die statistische Copolymerisation von Vinylaromat und Dien werden Lewis-Basen wie z. B. polare, aprotische Verbindungen, wie Ether und tertiäre Amine, bevorzugt. Beispiele für besonders effektive Ether sind Tetrahydrofuran und aliphatische Polyether wie Diethylenglycoldimethylether. Als tert. Amine sind Tributylamin und Pyridin zu nennen. Das polare Cosolvens wird dem dem unpolaren Lösungsmittel in einer geringen Menge, z. B. von 0,05 - 5 Vol-% zugesetzt. Besonders bevorzugt ist Tetrahydrofuran in einer Menge von 0,1 - 0,5 Vol.-%. Erfahrungsgemäß kommt man mit einer Menge von etwa 0,25 - 0,3 Vol.-% in den meisten Fällen aus.

Durch die Dosierung und Struktur der Lewis-Base werden die Copolymerisationsparameter und der Anteil an 1,2- bzw. 1,4-Verknüpfungen der Dieneinheiten bestimmt. Die Polymeren haben z. B. einen Anteil von 15 -40 % an 1,2-Verknüpfungen und 85 -60 % an 1,4-Verknüpfungen bezogen auf alle Dieneinheiten.

Bei der alkyllithium-initiierten Polymerisation eignet sich als alternative besonders bevorzugte Methode zur Herstellung statistischer Vinylaromat-Dien-Blöcke der Zusatz von Alkali- oder Erdalkalisalzen. Als Alkalimetall ist Kalium bevorzugt, als Erdalkalimetall Barium. Die Metalle werden bevorzugt als Alkoholate eingesetzt, wobei tertiäre Alkohole mit mehr als 4 C-Atomen wegen der Löslichkeit der Salze in aliphatischen Kohlenwasserstoffen besonders bevorzugt sind. Ein bevorzugtes Beispiel ist Kalium-tert.-Amylat, wobei bei Verwendung von Lithium-Alkylen als Initiator das molare Lithium/Kaliumverhältnis zwischen 10 und 50, bevorzugt zwischen 30 und 40 liegt. Der Vorteil der Verwendung von Kaliumsalzen gegenüber Lewis-Basen, wie THF, besteht darin, dass einpolymerisierte Butadieneinheiten zu über 85 % in 1,4-Verknüpfung eingebaut werden.

Die Polymerisationstemperatur kann zwischen 0°C und 130°C betragen.

Bevorzugt wird der Temperaturbereich zwischen 30°C und100°C.

Für die mechanischen Eigenschaften ist der Volumenanteil der Weichphase im Festkörper von entscheidender Bedeutung.

Vorzugsweise liegt der Volumenanteil der aus Dien- und vinylaromatischen Sequenzen aufgebauten Weichphase bei 60 - 95, bevorzugt bei 70 - 90 und besonders bevorzugt bei 80 - 90 Vol.-%. Die aus den vinylaromatischen Monomeren entstandenen Blöcke A bilden die Hartphase, deren Volumenanteil entsprechend 5-40, bevorzugt 10-30 und besonders bevorzugt 10-20 Vol.-% ausmacht.

Messbar ist der Volumenanteil der beiden Phasen mittels kontrastierter Elektronenmikroskopie oder Festkörper-NMR-Spektroskopie.

Der Anteil der vinylaromatischen Blöcke lässt sich nach Osmiumabbau des Polydienanteils durch Fällen und Auswiegen bestimmen.

Das künftige Phasenverhältnis eines Polymeren lässt sich auch aus den eingesetzten Monomermengen berechnen, wenn man jedes Mal vollständig auspolymerisieren lässt. Im Sinne der Erfindung eindeutig definiert wird das Blockcopolymerisate durch den Quotienten aus dem Volumenanteil in Prozent der aus den B/A-Blöcken gebildeten Weichphase und dem Anteil an Dieneinheiten in der Weichphase, der für die Kombination Styrol/ Butadien zwischen 25 und 70 Gew.-% liegt.

Durch den statischen Einbau der vinylaromatischen Verbindungen in den Weichblock des Blockcopolymerisats und die Verwendung von Lewis-Basen während der Polymerisation wird die Glasübergangstemperatur (T_{g}) beeinflusst. Eine Glasübergangstemperatur zwischen -50°C und 25°C, bevorzugt zwischen -50°C bis 0°C ist typisch, besonders bevorzugt wird eine Glasübergangstemperatur zwischen -50°C bis -20°C.

Das Molekulargewicht des Blocks A liegt dabei i. a. zwischen 1000 und 200.000, bevorzugt zwischen 5.000 und 80.000 besonders bevorzugt zwischen 10.000 und 40.000 [g/mol]. Innerhalb eines Moleküls können A-Blöcke unterschiedliche Molmasse haben.

Das Molekulargewicht des Blocks B/A liegt üblicherweise zwischen 2.000 bis 500.000 [g/mol], bevorzugt werden Werte zwischen 10.000 bis 300.000 [g/mol], besonders bevorzugt 40.000 bis 200.000.

Auch Block B/A kann wie Block A innerhalb eines Moleküls unterschiedliche Molekulargewichtswerte einnehmen.

Das Kupplungszentrum X wird durch die Umsetzung der lebenden anionischen Kettenenden mit einem mindestens bifunktionellen Kupplungsagens gebildet. Das Kupplungszentrum ist der Rest, der nach Kupplung in das Polymer eingebaut wird und an dem die beiden Ketten gebunden sind. Bei Sternpolymeren können es auch mehrere Ketten sein. Beispiele für derartige Verbindungen sind in US-A-3 985 830, 3 280 084, 3 637 554 und 4 091 053 zu finden. Bevorzugt werden z. B. epoxidierte Glyceride wie epoxidiertes Leinsamenöl oder Sojaöl eingesetzt; geeignet ist auch Divinylbenzol. Speziell für die Dimerisierung sind Dichlordialkylsilane, Dialdehyde wie Terephthalaldehyd und Ester wie Ethylformiat oder -benzoat geeignet.

Bevorzugte Polymerstrukturen sind A-B/A-A, X-[-B/A-A]₂ und Y-[-B/A-A]₂, wobei der statistische Block B/A selbst wieder in Blöcke B₁/A₁-B₂/A₂-B₂/A₃-. unterteilt sein kann. Bevorzugt besteht der statistische Block aus 2 bis 15 statistischen Teilblöcken, besonders bevorzugt aus 3 bis 10 Teilblöcken. Die Aufteilung des statistischen Blocks B/A in möglichst viele Teilblöcke Bₙ/Aₙ bietet den entscheidenden Vorteil, dass auch bei einem Zusammensetzungsgradienten innerhalb eines Teilblocks Bn/An, wie er sich in der anionischen Polymerisation unter praktischen Bedingungen nur schwer vermeiden lässt (s. u.), sich der B/A-Block insgesamt wie ein nahezu perfektes statistisches Polymer verhält.

Die Blockcopolymerisate besitzen ein dem Weich PVC sehr ähnliches Eigenschaftsspektrum, können jedoch vollkommen frei von migrationsfähigen, niedermolekularen Weichmachern hergestellt werden.

Eine hohe Rückstellkraft bei Deformation, so wie man sie bei thermoplastischen Elastomeren beobachtet, eine niedrige Verschweißtemperatur von weniger als 120°C und ein breiter Schweißbereich bei einer moderaten Klebrigkeit machen die erfindungsgemäßen Blockcopolymerisaten zu einem geeigneten Ausgangsmaterial für die Herstellung von Kabelummantelungen, Profilextrudate, Dichtungen, Dichtfolien, Bodenplatten, Schäumen, Folien, Schläuchen und anderen extrudierten, spritzgegossenen, thermogeformten oder blasgeformten Fertigteilen, für die hohe Zähigkeit in Kombination mit Rückstellvermögen und Flammwidrigkeit verlangt werden. Die erfindungsgemäßen Verbindungen sind daher insbesondere geeignet für Anwendungen im Bereich der Elektrotechnik, Elektronik, im Automobilsektor sowie im Innenausbau von Wohnungen und Gebäuden.

Die Polymerisation wird vorzugsweise mehrstufig durchgeführt und bei monofunktioneller Initiierung z. B. mit der Herstellung des Hartblocks A begonnen. Ein Teil der Monomeren wird im Reaktor vorgelegt und die Polymerisation durch Zugabe des Initiators gestartet. Um einen definierten, aus der Monomer- und Initiatordosierung berechenbaren Kettenaufbau zu erzielen, ist es empfehlenswert, den Prozess bis zu einem hohen Umsatz (über 99%) zu führen, bevor die zweite Monomerzugabe erfolgt. Zwingend erforderlich ist dies jedoch nicht.

Die Abfolge der Monomerzugabe richtet sich nach dem gewählten Blockaufbau. Bei monofunktioneller Initiierung wird z.B. zuerst die vinylaromatische Verbindung entweder vorgelegt oder direkt zudosiert. Danach sollten Dien und Vinylaromat möglichst gleichzeitig zugegeben werden. Durch das Mengenverhältnis von Dien zu vinylaromatischer Verbindung, die Konzentration und chemische Struktur der Lewis-Base bzw. des weiteren Alkali- oder Erdalkalisalzes sowie die Temperatur wird der statistische Aufbau und die Zusammensetzung des Blocks B/A bestimmt.

Vorzugsweise nimmt das Dien relativ zur Gesamtmasse einschließlich vinylaromatischer Verbindung einen Gewichtsanteil von 25 % bis 70 % ein. Anschließend kann Block A durch Zugabe des Vinylaromaten anpolymerisiert werden. Stattdessen können benötigte Polymerblöcke auch durch die Kopplungsreaktion miteinander verbunden werden. Im Falle der bifunktionellen Initiierung wird zuerst der B/A-Block aufgebaut gefolgt vom A-Block.

Die weitere Aufarbeitung erfolgt nach den üblichen Verfahren. Es empfiehlt sich, dabei in einem Rührkessel zu arbeiten und mit einem Alkohol wie Isopropanol die Carbanionen zu protonieren, vor der weiteren Aufarbeitung in üblicher Weise mit CO₂/Wasser schwach sauer zu stellen, das Polymer mit Oxidationsinhibitoren und Radikalfängern wie Phosphiten, insbesondere Trisnonylphenylphosphit (TNPP), oder Irgaphos 168 oder sterisch gehinderten Phenolen wie z. B. α-Tocopherol (Vitamin E) bzw. mit unter dem Handelsnamen Irganox® 1076 oder Irganox® 3052 oder Irganox® 1010. bzw. Sumilizer® GM und GS erhältlichen Produkten zu stabilisieren, das Lösungsmittel nach den üblichen Verfahren zu entfernen, zu extrudieren und zu granulieren. Das Granulat kann wie andere Kautschuksorten mit einem Antiblockmittel gegen Verkleben geschützt werden. Eine bevorzugte Stabilisatorkombination enthält Irgaphos® 176, Sumilizer® GS und Irganox® 1010.

### Flammschutzmittel

Die erfindungsgemäßen flammgeschützten Blockcopolymerisate enthalten als Komponente B) ein Flammschutzmittel umfassend:
B1) expandierbaren Graphit,
B2) eine Phosphor enthaltende Verbindung und
B3) ein fluorhaltiges Polymer.

In einer bevorzugten Ausführungsform ist das Flammschutzmittel B in einer Menge von 20 bis 40, insbesondere 25 bis 40 Gew.-%, bezogen auf das Blockcopolymerisat inklusive des Flammschutzmittels und gegebenenfalls übriger Additive enthalten. In einer weiteren bevorzugten Ausführungsform beträgt der Anteil des Flammschutzmittels 28 bis 35 Gew.-%.

In einer weiteren bevorzugten Ausführungsform beträgt der Gewichtsanteil der Phosphor enthaltenden Verbindung B2 und des fluorhaltigen Polymeren B3, bezogen auf das Blockcopolymerisat inklusive des Flammschutzmittels und gegebenenfalls übriger Additive, zusammen mindestens 8, insbesondere mindestens 10 Gew.-%.

In einer weiteren bevorzugten Ausführungsform enthält das Flammschutzmittel
20 bis 80 Gewichtsteile, bezogen auf das gesamte Flammschutzmittel des expandierbaren Graphits B1 mit einer Expansionstemperatur größer als 270°C
20 bis 80 Gewichtsteile, bezogen auf das gesamte Flammschutzmittel der phosphorhaltigen Verbindung B2
0,1 bis 5 Gewichtsteile, bezogen auf das gesamte Flammschutzmittel des fluorierten Polymeren B3.

Komponente B1) ist der dem Fachmann bekannte und in der Literatur beschriebene expandierbare Graphit, so genannter Blähgraphit (wärme- bzw. hitzeexpandierbarer Graphit). Dieser leitet sich in der Regel von natürlichem oder künstlichem Graphit ab.

Der Blähgraphit ist beispielsweise erhältlich durch Oxidation von natürlichem und/oder künstlichem Graphit. Als Oxidationsagentien können H₂O₂ oder Salpetersäure in Schwefelsäure eingesetzt werden.

Weiterhin kann der Blähgraphit durch Reduktion, z. B. mit Natriumnaphthalid in einem aprotischen organischen Lösungsmittel hergestellt werden.

Aufgrund seiner Schichtgitterstruktur ist Graphit in der Lage, spezielle Formen von Einlagerungsverbindungen zu bilden. In diesen so genannten Zwischengitterverbindungen können Fremdatome oder -moleküle in z. T. stöchiometrischen Verhältnissen in die Räume zwischen den Kohlenstoffatomen aufgenommen werden.

Die Oberfläche des Blähgraphits kann zur besseren Verträglichkeit mit dem Blockcopolymerisat mit einem Beschichtungsmittel beschichtet sein, beispielsweise mit dem Fachmann bekannten Silanschlichten.

Für den Fall, dass der Blähgraphit durch Oxidation erhalten wurde, kann es notwendig sein, eine alkalische Verbindung zuzusetzen, da der Blähgraphit (durch die enthaltende Säure) ansonsten Korrosion der Formmassen und/oder Lager- und Herstellapparate derartiger Formmassen verursachen kann. Insbesondere Alkaliverbindungen sowie Mg(OH)₂ oder Al-Hydroxide können in Mengen bis zu 10 %, vorzugsweise bis zu 5 Gew.-% (bezogen auf 100 Gew.-% B1) zugegeben werden. Vorteilhaft erfolgt die Mischung, bevor die Komponenten compoundiert werden.

Vorzugsweise beträgt die Hitze-Ausdehnung des Blähgraphits bei schnellem Aufheizen von Raumtemperatur auf 800°C (in Richtung der c-Achse des Kristalls) mindestens 100 ml/g, vorzugsweise mindestens 110 ml/g (sog. spezifische Volumenänderung).

Wesentlich für die Eignung als Flammschutzmittel ist es, dass der Blähgraphit sich nicht in größerem Ausmaß ausdehnt bei Temperaturen unter 270 °C, bevorzugt unter 280 °C. Darunter versteht der Fachmann, dass der Blähgraphit bei den genannten Temperaturen in einem Zeitraum von 10 min eine Volumenexpansion von weniger als 20 % erfährt.

Der Ausdehnungskoeffizient (als spezifische Kerngröße) bedeutet in der Regel die Differenz zwischen dem spezifischen Volumen (ml/g) nach Erhitzen und dem spezifischen Volumen bei 20 °C Raumtemperatur. Dies wird allgemein gemessen nach folgender Vorschrift: Ein Quarzbehälter wird auf 1000 °C in einem elektrischen Schmelzeofen erhitzt. 2 g des Blähgraphits werden schnell in den Quarzbehälter gegeben und dieser 10 sec. im Schmelzeofen belassen.

Das Gewicht von 100 ml des expandierten Graphits wird gemessen, um die sog. "loosened apparent specific gravity" zu bestimmen. Der Kehrwert bildet dann das spezifische Volumen bei dieser Temperatur. Das spezifische Volumen bei Raumtemperatur wird entsprechend bei 20 °C gemessen. (Ausdehnungskoeffizient = spez. Volumen nach Erhitzen - spezifisches Volumen bei 20 °C).

Der mittlere Teilchendurchmesser, der auch als D₅₀-Wert der integralen Volumenverteilung bezeichnet wird, liegt vor der Vermischung vorzugsweise zwischen 10 µm und 1000 µm, bevorzugt zwischen 30 µm und 850 mµ, insbesondere bevorzugt zwischen 200 µm und 700 µm. Sind die mittleren Teilchengrößen niedriger, wird in der Regel keine ausreichende Flammschutzwirkung erzielt; sind sie größer, werden üblicherweise die mechanischen Eigenschaften der thermoplastischen Formmassen nachteilig beeinflusst. Die Dichte des Blähgraphits liegt üblicherweise im Bereich von 0,4 bis 2 g/cm³.

Bei den phosphorhaltigen Verbindungen der Komponente B2) handelt es sich um organische und anorganische Phosphor enthaltende Verbindungen, in denen der Phosphor vorzugsweise die Wertigkeitsstufe -3 bis +5 besitzt. Unter der Wertigkeitsstufe soll der Begriff "Oxidationsstufe" verstanden werden, wie er im Lehrbuch der Anorganischen Chemie von A. F. Hollemann und E. Wiberg, Walter des Gruyter und Co. (1964, 57. bis 70. Auflage), Seite 166 bis 177, wiedergegeben ist. Phosphorverbindungen der Wertigkeitsstufen -3 bis +5 leiten sich von Phosphin (-3), Diphosphin (-2), Phosphinoxid (-1), elementarem Phosphor (+0), hypophosphoriger Säure (+1), phosphoriger Säure (+3), Hypodiphosphorsäure (+4) und Phosphorsäure (+5) ab.

Bevorzugte Verbindungen B2) sind anorganisches oder organisches Phosphat, Phosphite, Phosphonate, Phosphatester, Triphenylphosphinoxid oder roter Phosphor. Besonders bevorzugt sind Phosphorverbindungen mit einem Melaminrest, insbesondere melaminmodifiziertes Ammoniumpolyphosphat, Melaminpolyphosphat oder Melaminphosphat.

Als Komponente B3) ist ein fluorhaltiges Polymer enthalten. Bevorzugt sind fluorhaltige Ethylenpolymerisate. Hierbei handelt es sich insbesondere um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-hexafluor-propylen-Copolymere oderTetrafluorethylen-Copolymerisate mit kleineren Anteilen (in der Regel bis zu 50 Gew.-%) copolymerisierbarer ethylenisch ungesättigter Monomerer. Diese werden z. B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate weisen bevorzugt eine mittlere Teilchengröße D50 im Bereich von 0,05 bis 10 um, insbesondere von 0,1 bis 5 um auf. Diese geringen Teilchengrößen lassen sich besonders bevorzugt durch Verwendung von wässrigen Dispersionen von fluorhaltigen Ethylenpolymerisaten und deren Einarbeitung in eine Polymerschmelze erzielen.

### Weitere Komponenten

Die erfindungsgemäßen Blockcopolymerisate können weitere Zusatzstoffe als Komponente enthalten. Geeignet sind grundsätzlich alle dem Fachmann bekannten und in der Literatur beschriebenen kunststoffüblichen Zusatzstoffe. Kunststoffübliche Zusatzstoffe im Sinne der vorliegenden Erfindung sind beispielsweise Stabilisatoren und Oxidationsverzögerer, Mittel gegen Wärmezersetzung und Zersetzung durch ultraviolettes Licht, Gleit- und Entformungsmittel, Farbstoffe und Pigmente und Weichmacher sowie Fasern, beispielsweise Glasfasern oder Kohlenstofffasern.

Oxidationsverzögerer und Wärmestabiliisatoren, die gemäß der Erfindung zugesetzt werden können, sind z. B. sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf das Gewicht der thermoplastischen Formmassen, einsetzbar.

Beispiele für UV-Stabilisatoren sind verschiedene substituierte Resorcine, Salicylate, Benzotriazole und Benzophenone, die im Allgemeinen in Mengen bis zu 2 Gew.-%, bezogen auf das Gewicht der thermoplastischen Formmassen, eingesetzt werden.

Gleit- und Entformungsmittel, die in der Regel in Mengen bis zu 1 Gew.-%, bezogen auf das Gewicht der Copolymerisate, zugesetzt werden können, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z. B. Distearylketon, eingesetzt werden. Erfindungsgemäß geeignet sind insbesondere Zink-, Magnesium- und Calciumstearat sowie N,N'-Ethylen-bis-stearamid.

Als Glasfasern können alle dem Fachmann bekannten und in der Literatur beschriebenen Glasfasern eingesetzt werden (siehe beispielsweise Milewski, J. V., Katz, H. S. "Handbook of Reinforcements for Plastics", S. 233 ff., Van Nostrand Reinholt Company Inc, 1987).

### Herstellverfahren:

Die Blockcopolymerisate werden vorzugsweise durch Schmelzevermischung der Komponenten in einem Schneckenextruder hergestellt, wobei der Schneckenextruder entlang der Förderrichtung in dieser Reihenfolge mindestens eine Dosierzone, eine Plastifizierzone, eine Homogenisierzone und eine Austragszone umfasst.

Geeignete Schneckenextruder sind beispielsweise in Saechtling, Kunststoff-Taschenbuch, Hanser Verlag, München, Wien, Ausgabe 26, 1995, Seiten 191 bis 246, beschrieben.

Schneckenextruder weisen üblicherweise Abschnitte unterschiedlicher Funktion, so genannte "Zonen" auf. Die unterschiedlichen Zonen der Schneckenextruder sind nicht notwendigerweise identisch mit den einzelnen Bauteilen wie Gehäuseteilen oder Schneckensegmenten, aus denen die Schneckenextruder montiert sind. Eine Zone besteht in der Regel aus mehreren Bauteilen. Die einzelnen Zonen können je nach Funktion unterschiedliche räumliche Ausdehnungen, beispielsweise unterschiedliche Längen oder Volumina, haben.

Üblicherweise weisen Schneckenextruder eine oder mehrere der im Folgenden beschriebenen Zonen auf. Darüber hinaus können Schneckenextruder aber auch Zonen aufweisen, deren Funktion im Folgenden nicht explizit beschrieben wird.

Unter Dosierzone ist der Abschnitt eines Schneckenextruders zu verstehen, in dem eine oder mehrere Komponenten, beispielsweise ein thermoplastisch verarbeitbares Polymer, dem Schneckenextruder zugeführt werden. Diese Zuführung kann mit einer Dosiereinrichtung erfolgen, die beispielsweise aus einer oben liegenden Öffnung in dem Schneckenextruder mit aufgesetztem Trichter besteht, so dass die zu dosierende Komponente durch Schwerkraft in den Schneckenextruder gelangt. Die Dosiereinrichtung kann aber auch beispielsweise aus einer Förderschnecke oder einem Extruder bestehen, durch die die zu dosierende Komponente durch die Dosieröffnung des Schneckenextruders gedrückt wird.

Unter Plastifizierzone (oftmals auch als Aufschmelzzone bezeichnet) ist der Abschnitt eines Schneckenextruders zu verstehen, in dem eine Komponente in einen warmformbaren, meist schmelzflüssigen oder plastisch verformbaren, Zustand gebracht wird. In der Regel wird dies durch Beheizen oder mechanisch eingebrachte Energie erreicht. Zum Einbringen mechanischer Energie kommen als Plastifizierungselemente die dem Fachmann geläufigen Bauteile in Betracht, beispielsweise Schneckenelemente mit geringer Steigung in Förderrichtung, Knetblöcke mit schmalen oder breiten, fördernden oder nachfordernden Knetscheiben, Schneckenelemente mit einer Steigung entgegen der Förderrichtung, oder eine Kombination solcher Elemente. Die Auswahl der Plastifizierungselemente in der Plastifizierzone richtet sich hinsichtlich ihrer Art, Anzahl und Dimensionierung nach den Komponenten der thermoplastischen Formmassen, insbesondere nach der Viskosität und Erweichungstemperatur sowie der Mischbarkeit der Komponenten.

Unter Homogenisierzone ist der Abschnitt eines Schneckenextruders zu verstehen, in dem eine oder mehrere Komponenten, von denen mindestens eine im warmformbaren Zustand ist, homogenisiert werden. Diese Homogenisierung erfolgt meist durch Mischen, Kneten oder Scheren. Geeignete Misch-, Knet- und Scherelemente sind beispielsweise die bereits als Plastifizierungselemente beschriebenen Mittel. Darüber hinaus sind geeignete Homogenisierelemente Kombinationen von fördernden, nichtfördenden und rückfördernden Knetblöcken, die aus schmalen oder breiten Knetscheiben oder deren Kombinationen bestehen können. Ebenso geeignete Homogenisierelemente sind so genannte Zahnscheiben, die auch mit fördernden oder nicht fördernd angestellten Zähnen ausgerüstet sein können, oder so genannte Zahnmischelemente, bei denen beispielsweise der Gewindegang nicht durchgehend ist, sondern aus einer Reihe von Zähnen besteht; auch diese Zahnmischelemente können fördernd oder nichtfördemd ausgerüstet sein. Weitere, dem Fachmann bekannte Homogenisierelemente sind so genannte SMEs, Schnecken mit durchbrochenen Gängen, Blisterscheiben, und diverse Arten von Sonderelementen, die von unterschiedlichen Extruderherstellern kommerziell angeboten werden.

Unter Austragszone ist der Abschnitt eines Schneckenextruders zu verstehen, in dem der Austrag der thermoplastisch verarbeitbaren Formmasse aus dem Schneckenextruder vorbereitet und durch die Austrittsöffnung durchgeführt wird. Die Austragszone besteht meist aus einer Förderschnecke und einem geschlossenen Gehäuseteil, das mit einer definierten Austrittsöffnung abgeschlossen ist.

Bevorzugt wird als Austrittsöffnung ein Düsenkopf verwendet, der beispielsweise als Düsenplatte oder Düsenleiste ausgebildet ist, wobei die Düsen kreisförmig (Lochdüsenplatte), schlitzförmig oder in anderer Weise gestaltet sein können. Das im Falle einer Düsenplatte als Strang ausgetragene Produkt wird wie üblich, z.B. in Wasser abgekühlt und granuliert. Speziell bei Verwendung einer Schlitzdüse ist Würfelgranulierung möglich.

Sofern die elastischen Blockcopolymerisate nicht erst als Granulat erhalten, sondern direkt weiterverwendet werden sollen, ist auch die Weiterverarbeitung im heißen Zustand oder die Direktextrusion von Platten, Folien, Rohren und Profilen vorteilhaft.

Ein Schneckenextruder kann darüber hinaus weitere Zonen enthalten, beispielsweise Entlüftungs- oder Entgasungszonen zum Abführen gasförmiger Bestandteile oder Abquetsch- und Entwässerungszonen zum Abtrennen und Austragen flüssiger Bestandteil, bei denen es sich um Wasser, aber auch um andere Stoffe handeln kann. Entgasungs-, Abquetsch- und Entwässerungszonen sowie deren apparative Ausführung und Anordnung sind in WO 98/13412 beschrieben, weshalb bezüglich dieser Merkmale ausdrücklich auf die genannte Schrift verwiesen wird.

Ein Abschnitt eines Schneckenextruders kann auch zwei oder mehr der genannten Zonen vereinigen. Wird beispielsweise in die Homogenisierzone eines Extruders ein weiterer Stoff zudosiert, so fungiert die Homogenisierzone gleichzeitig als Dosierzone. In analoger Weise können die anderen der genannten Zonen in einem Abschnitt der Schneckenextruder gleichzeitig realisiert sein.

Die einzelnen Zonen können räumlich voneinander klar abgrenzbar sein oder kontinuierlich ineinander übergehen. So ist beispielsweise bei einem Extruder der Übergang von der Plastifizierzone in die Homogenisierzone räumlich nicht immer klar abgrenzbar. Es findet oftmals ein kontinuierlicher Übergang zwischen den beiden Zonen statt.

Wie allgemein bekannt ist, können die verschiedenen Zonen eines Schneckenextruders individuell geheizt oder gekühlt werden, um entlang der Förderrichtung ein optimales Temperaturprofil einzustellen. Geeignete Heiz- und Kühleinrichtungen sind dem Fachmann bekannt.

Die im Einzelfall zu wählenden Temperaturen und räumlichen Abmessungen der einzelnen Zonen unterscheiden sich in Abhängigkeit der chemischen und physikalischen Eigenschaften der Komponenten und deren Mengenverhältnissen.

Wie bereits vorstehend beschrieben wird in den erfindungsgemäßen Verfahren der Schmelzevermischung ein Schneckenextruder eingesetzt, der entlang der Förderrichtung in dieser Reihenfolge mindestens eine Dosierzone, eine Plastifizierzone, eine Homogenisierzone und eine Austragszone umfasst.

In einer Ausführungsform der Erfindung können sämtliche Komponenten der elastischen Blockcopolymerisate zeitgleich, entweder räumlich getrennt voneinander oder gemeinsam, der Dosierzone des Schneckenextruders zugeführt werden. Es ist auch möglich, dass einzelne Komponenten der thermoplastischen Formmassen -ausgenommen der wesentlichen Menge der Komponente B1)- vorgemischt und der Dosierzone zugeführt werden, und dann die restlichen Komponenten einzeln und/oder ebenfalls gemischt in Förderrichtung gesehen hinter dieser Dosierzone hinzugegeben werden.

Bevorzugt ist, dass die Dosierung der Hauptmenge, bevorzugt der gesamten Menge, des expandierbaren Graphits B1) in den Schneckenextruder an einer Stelle erfolgt, hinter der - in Förderrichtung betrachtet - die Extruderschnecke im Wesentlichen keine Scherelemente umfasst. Bevorzugt umfasst die Extruderschnecke hinter der Dosierstelle nur noch Schneckenelemente, die eine im Wesentlichen fördernde Wirkung auf das Extrusionsgut haben.

Grundsätzlich kann die Dosierung des expandierbaren Graphits B1) in den Schneckenextruder somit auch schon in der Dosierzone oder der Plastifizierzone erfolgen, sofern die Extruderschnecke von dieser Zugabestelle der Komponente B1) aus gesehen in Förderrichtung im Wesentlichen keine Scherelemente mehr umfasst. Allerdings ist es bei dieser Ausführungsform der erfindungsgemäßen Verfahren schwierig, homogene Formmassen zu erhalten.

Vorteilhafterweise erfolgt die Dosierung des expandierbaren Graphits B1) in den Schneckenextruder daher in der Homogenisierzone (d. h., die Extruderschnecke kann in der Plastifizierzone mit Scherelementen ausgerüstet werden), besonders bevorzugt zwischen Homogenisierzone und Austragszone (d. h., die Extruderschnecke kann in der Plastifizierzone und/oder der Homogenisierzone mit Scherelementen ausgerüstet werden).

Der expandierbare Graphit B1) kann in reiner Form, aber auch in Mischung mit einer anderen Komponente, als so genannter Additivbatch, zugeführt werden.

Die Blockpolymerisate weisen gegenüber bekannten Formmassen eine verbesserte Kombination aus flammhemmenden und mechanischen Eigenschaften auf.

Die Erfindung wird nachstehend anhand von Beispielen näher erläutert.

### Beispiele:

Meßmethoden:
MVR (220 °C/10 kg)

Die Schmelz-Volumenfließrate (MVR Melt Volume Ratio) wird gemäß ISO 1133B an einer Polymerschmelze bei 220 °C gemessen.
Charpy ak (23 °C)

Die Charpy Kerbschlagzähigkeit (Charppy notched impact resistance (ak) wird bei 23 °C gemäß ISO 179-2/1 eA(F) an Probekörpern (Abmessungen 80 x 10 x 4 mm, hergestellt gemäß ISO 294) gemessen.
Charpy an (23 °C)

Die Charpy Schlagzähigkeit wurde gemäß 350 179 1eU bei 23°C bestimmt.
Arbeit b. z. Bruch

### Arbeit bei zum Bruch (W-B)

Bruch Energie gemessen als Fläche unter der Spannungs-Dehnungskurve.

### E-Modul

Der Elastizitätsmodul wird gemäß ISO 527-2/1A/50 an Testkörpern hergestellt gemäß ISO 294 gemessen.

### Durchschnittliche Brennzeiten

Im Brandtest in Anlehnung an UL 94, vertical burning standard, wurde an 2 Stäben mit einer Dicke von 1,6 mm die Nachbrennzeit gemessen. Die erhaltenen Zeiten wurden gemittelt.

### Einsatzstoffe

### Elastomeres Blockcopolymerisat

Als Komponenten wurden eingesetzt:

| Komponente | chemische Bezeichnung | Spezifikation | Firma |
|---|---|---|---|
| A | Styrol-Butadien-Styrol-Blockcopolymer | Styroflex^{®} 2566 | BASF |
| B1 | Blähgraphit | Blähgraphit Nord-Min^{®} 503 der Firma Nordmann, Rassmann, GmbH, enthaltend 8 Gew.-% Schwefelsäureeinlagerung, mit einer mittleren Teilchengröße D₅₀ von 465 µm, einer freien Expansion (beginnend bei ca. 300°C) von mindestens 150 ml/g und einer Schüttdichte von 0,5 g/ml bei 20°C. | Nordmann |
| B2 | Melaminpolyphosphat | Melapur^{®} 200 | Ciba |
| B3 | Teflondispersion | PTFE TE-3893 | C. H. Erbslöh |

### Extruder

### Zwei-Wellen-Extruder ZSK 30

Es wurde ein Zweischneckenextruder ZSK 30 der Fa. Werner und Pfleiderer, bestehend aus 11 Gehäuseschüssen (die Zählung der Gehäuseschüsse beginnt bei 0, der Dosierzone, und setzt sich in Förderrichtung bis 10, der Austragszone, fort) und einem dazu gehörenden Schneckenpaar, verwendet. Der Außendurchmesser der Schnecken betrug 30 mm. In den Gehäuseschuss 0, der mit einer oben liegenden Dosieröffnung versehen war, wurden alle Komponenten, ausgenommen der Komponente B1), dosiert. Die Gehäuseschüsse 2 und 3 enthalten die Aufschmelzzone, so dass das Extrusionsgut bei Verlassen des Gehäuseschusses 3 schmelzeflüssig vorliegt. Komponente B1) wurde in den Gehäuseschuss 4 dosiert, Die Schnecke war in den Gehäuseschüssen 4 bis 10 nur mit fördernden Elementen versehen.

### SE-II:

Gleicher Schneckenextruder wie ZSK30, wobei jedoch im Gehäuseschuss 6 die Schnecke mit einem Mischelement, welches kaum Scherwirkung entfaltet, versehen war.

### Herstellung der Formmassen und Formkörper:

Die Komponenten wurden zur Bestimmung der mechanischen Eigenschaften und Brandeigenschaften in den einen Schneckenextruder homogenisiert und zu Standardformkörpern spritzgegossen.

### Probenherstellung

Proben für den Brenntest wurden gemäß der Vorschrift UL94 hergestellt.

### Durchführung der Tests

Die Proben wurden gemäß UL94 verbrannt. Außerdem wurden ihre mechanischen Eigenschaften gemessen. Aus folgenden Tabellen gehen die Zusammensetzungen und erhaltenen Ergebnisse hervor:

### Ergebnisse

Beispiel 1/ZSK30, Zweiwellenextruder

| **Komponente** | **Gewichts-%** |
|---|---|
| B1 | 20 |
| B3 | 1 |
| B2 | 10 |
| A | 69 |

| **Test** | **Unit** | **Ergebnis** |
|---|---|---|
| MVR (200 °C/5 kg) | cm³/10 min | 6,7 |
| Charpy ak (23 °C) | kJ/m² | No break |
| Charpy an (23 °C) | kJ/m³ | 80,2 |
| Bruchspannung | MPa | 15,36 |
| Bruchdehnung | % | 478,32 |
| Streckspannung | MPa | 230 |
| E-Modul | MPa | 230 |
| Arbeit b. z. Bruch (W_B) | mJ/mm2 | 2282,8 |

### Beispiel 2/Midi extruder (DSM)

| **Komponente** | **Gewichts-%** |
|---|---|
| B1 | 20 |
| B2 | 10 |
| B3 | 1 |
| A | 69 |

| Test | Unit | Ergebnis |
|---|---|---|
| Durchschnittliche Brennzeit | S | 13,5 |

## Patentansprüche

1. Flammgeschütztes elastisches Blockpolymerisat enthaltend polymerisierte Einheiten wenigstens eines vinylaromatischen Monomeren und wenigstens eines Dienmonomeren mit wenigstens einem Flammschutzmittel B, **dadurch gekennzeichnet, dass** das Flammschutzmittel B)
B1) einen expandierbaren Graphit
B2) eine Phosphor enthaltende Verbindung und
B3) ein fluorhaltiges Polymer enthält.

2. Blockcopolymerisat nach Anspruch 1, **dadurch gekennzeichnet, dass** das Blockcopolymerisat aus mindestens einem einpolymerisierte Einheiten eines vinylaromatischen Monomeren aufweisenden, eine Hartphase bildenden Block A und/oder einem Dienmonomere aufweisenden, eine erste gummielastische (Weich-)Phase bildenden Blocks B und mindestens einem einpolymerisierte Einheiten sowohl eines vinylaromatischen Monomeren wie eines Diens aufweisenden elastomeren, eine (gegebenenfalls zweite oder weitere) Weichphase bildenden Block B/A, enthält.

3. Blockcopolymerisat nach Anspruch 2, **dadurch gekennzeichnet, dass** die Glastemperatur T_{g} des Blocks A über 25 °C und die des Blocks B/A unter 25 °C liegt und das Phasenvolumen-Verhältnis von Block A zu Block B/A so gewählt ist, dass der Anteil der Hartphase am gesamten Blockcopolymerisat 1-40 Volumen-% und der Gewichtsanteil des Diens weniger als 50 Gew.-% beträgt.

4. Blockcopolymerisat nach wenigstens einem der vorhergehenden Ansprüche, **dadurch gekennzeichnet, dass** das Flammschutzmittel in einer Menge von 20 bis 40 Gew.-% bezogen auf das Blockcopolymerisat, inklusive des Flammschutzmittels und übriger Additive, enthalten ist.

5. Blockcopolymerisat nach wenigstens einem der vorhergehenden Ansprüche, **dadurch gekennzeichnet, dass** das Flammschutzmittel B enthält:
20 bis 80 Gewichtsteile, bezogen auf das gesamte Flammschutzmittel des expandierbaren Graphits B1 mit einer Expansionstemperatur > 270°C
20 bis 80 Gewichtsteile, bezogen auf das gesamte Flammschutzmittel der phosphorhaltigen Verbindung B2 und
0,1 bis 5 Gewichtsteile, bezogen auf das gesamte Flammschutzmittel des fluorhaltigen Polymer B3.

6. Blockcopolymerisat nach wenigstens einem der vorhergehenden Ansprüche, **dadurch gekennzeichnet, dass** die phosphorhaltige Verbindung B2 eine Phosphorverbindung mit einem Melaminrest ist.

7. Blockcopolymerisat nach wenigstens einem der vorhergehenden Ansprüche, **dadurch gekennzeichnet, dass** die phosphorhaltige Verbindung B2 ein Melaminmodifiziertes Ammoniumpolyphosphat, ein Melaminpolyphosphat oder Melaminphosphat ist.

8. Blockcopolymerisat nach wenigstens einem der vorhergehenden Ansprüche, **dadurch gekennzeichnet, dass** die phosphorhaltige Verbindung B2 ein Melaminpolyphosphat ist.

9. Verfahren zur Herstellung eines elastischen Blockcopolymerisats mit einem Flammschutzmittel gemäß wenigstens einem der vorhergehenden Ansprüche, **dadurch gekennzeichnet, dass** das Blockcopolymerisat mit dem Flammschutzmittel in einem Extruder gemischt wird.

10. Verwendung eines elastischen Blockcopolymerisats gemäß wenigstens einem der Ansprüch 1 bis 8 zur Herstellung von Formkörpern.

11. Formkörper, insbesondere Folien, Profilextrudate, Schläuche, Kabelummantelungen, Dichtungsmaterialien und Bodenplatten sowie Schäume auf Basis eines elastischen Blockcopolymerisates gemäß wenigstens einem der Ansprüche 1 bis 8.

## Claims

1. A flameproofed resilient block polymer comprising polymerized units of at least one vinylaromatic monomer and at least one diene monomer with at least one flameproofing agent B, wherein the flameproofing agent B) comprises
B1) an expandable graphite
B2) a compound comprising phosphorus and
B3) a fluorine-containing polymer.

2. The block copolymer according to claim 1, wherein the block copolymer comprises at least one block A having polymerized units of a vinylaromatic monomer and forming a hard phase and/or a block B having diene monomers and forming a first elastomeric (soft) phase and at least one elastomeric block B/A having polymerized units of both a vinylaromatic monomer and a diene and forming a (optionally second or further) soft phase.

3. The block copolymer according to claim 2, wherein the glass transition temperature T_{g} of block A is above 25°C and that of block B/A is below 25°C and the phase volume ratio of block A to block B/A is chosen so that the proportion of the hard phase, based on the total block copolymer, is 1-40% by volume and the proportion by weight of the diene is less than 50% by weight.

4. The block copolymer according to at least one of the preceding claims, wherein the flameproofing agent is present in an amount of from 20 to 40% by weight, based on the block copolymer, including the flameproofing agent and other additives.

5. The block copolymer according to at least one of the preceding claims, wherein the flameproofing agent B comprises:
from 20 to 80 parts by weight, based on the total flameproofing agent, of the expandable graphite B1 having an expansion temperature of > 270°C
from 20 to 80 parts by weight, based on the total flameproofing agent, of the phosphorus-containing compound B2 and
from 0.1 to 5 parts by weight, based on the total flameproofing agent, of the fluorine-containing polymer B3.

6. The block copolymer according to at least one of the preceding claims, wherein the phosphorus-containing compound B2 is a phosphorus compound with a melamine radical.

7. The block copolymer according to at least one of the preceding claims, wherein the phosphorus-containing compound B2 is a melamine-modified ammonium polyphosphate, a melamine polyphosphate or melamine phosphate.

8. The block copolymer according to at least one of the preceding claims, wherein the phosphorus-containing compound B2 is a melamine polyphosphate.

9. A process for the preparation of a resilient block copolymer with a flameproofing agent according to at least one of the preceding claims, wherein the block copolymer is mixed with a flameproofing agent in an extruder.

10. The use of a resilient block copolymer according to any of claims 1 to 8 for the production of moldings.

11. A molding, in particular film, extruded profile, tube, cable sheath, sealing material and base plate and foam based on a resilient block copolymer according to any of claims 1 to 8.

## Revendications

1. Copolymère séquencé, élastique et ignifugé, formé de séquences polymérisées d'au moins un monomère vinylaromatique et d'au moins un diène monomère, contenant un agent d'ignifugation B, **caractérisé en ce que** l'agent d'ignifugation B) contient
B1) un graphite expansible,
B2) un composé contenant du phosphore, et
B3) un polymère fluoré.

2. Copolymère séquencé selon la revendication 1, **caractérisé en ce que** le copolymère séquencé comporte au moins un bloc A présentant des séquences polymérisées d'un monomère vinylaromatique, formant une phase durcie, et/ou des blocs B présentant un monomère de diène et formant une première phase (souple) caoutchouteuse élastique, et au moins un bloc B/A élastomère, présentant des séquences polymérisées aussi bien d'un monomère vinylaromatique que d'un diène, formant une (le cas échéant deuxième ou au-delà) phase souple.

3. Copolymère séquencé selon la revendication 2, **caractérisé en ce que** la température de transition vitreuse Tg du bloc A est supérieure à 25°C et celle du bloc B/A est inférieure à 25°C, le rapport entre le volume des phases du bloc A et du bloc B/A étant choisi de telle sorte que la proportion de la phase rigide, par rapport à la totalité du copolymère séquencé, soit de 1 à 40 % en volume, et la proportion en poids de diène soit inférieure à 50 % en poids.

4. Copolymère séquencé selon au moins l'une des revendications précédentes, **caractérisé en ce que** l'agent d'ignifugation est présent en une quantité de 20 à 40 % en poids par rapport à la totalité formé par le copolymère séquencé, l'agent d'ignifugation et les autres additifs.

5. Copolymère séquencé selon au moins l'une des revendications précédentes, **caractérisé en ce que** l'agent d'ignifugation B contient :
- 20 à 80 parties en poids, par rapport à la totalité de l'agent d'ignifugation, de graphite expansible B1, ayant une température d'expansion > 270°C,
- 20 à 80 parties en poids, par rapport à la totalité de l'agent d'ignifugation, duecomposé phosphoré B2, et
- 0,1 à 5 parties en poids, par rapport à la totalité de l'agent d'ignifugation, de polymère fluoré B3.

6. Copolymère séquencé selon au moins l'une des revendications précédentes, **caractérisé en ce que** le composé phosphoré B2 est un composé du phosphore comportant un résidu de mélanine.

7. Copolymère séquencé selon au moins l'une des revendications précédentes, **caractérisé en ce que** le composé phosphoré B2 est un polyphosphate d'ammonium modifié par la mélanine, un polyphosphate de mélanine ou un phosphate de mélanine.

8. Copolymère séquencé selon au moins l'une des revendications précédentes, **caractérisé en ce que** le composé phosphoré B2 est un polyphosphate de mélanine.

9. Procédé de fabrication d'un copolymère séquencé élastique comportant un agent d'ignifugation selon au moins l'une des revendications précédentes, **caractérisé en ce que** le copolymère séquencé est mélangé avec l'agent d'ignifugation dans une extrudeuse.

10. Utilisation d'un copolymère séquencé élastique selon l'une des revendications 1 à 8, pour fabriquer des objets moulés.

11. Objets moulés, en particulier feuilles, extrudats profilés, tuyaux souples, gainage de câbles, matériaux d'étanchéité et plaques de sol, ainsi que mousses, à base d'un copolymère séquencé élastique selon au moins l'une des revendications 1 à 8.
